# EUROPÄISCHE PATENTSCHRIFT

(11) **EP 1 590 075 B1**
(45) Veröffentlichungstag und Bekanntmachung des Hinweises auf die Patenterteilung: **24.05.2006**
(21) Anmeldenummer: 04705056.2
(22) Anmeldetag: 26.01.2004
(51) Int. Cl.: B01F 7/04, B29B 7/28

(54) **VERFAHREN ZUR KONTINUIERLICHEN PHASENUMWANDLUNG EINES PRODUKTES**
METHOD FOR THE CONTINUOUS PHASE CONVERSION OF A PRODUCT
PROCEDE POUR CONVERTIR EN CONTINU LES PHASES D'UN PRODUIT

(30) Priorität: 27.01.2003 DE 10303167
(43) Veröffentlichungstag der Anmeldung: 02.11.2005
(73) Patentinhaber: LIST Holding AG, 4422 Arisdorf (CH)
(72) Erfinder: FLEURY, Pierre-Alain, CH-4433 Ramlinsburg (CH)
(74) Vertreter: Weiss, Peter
(86) Internationale Anmeldenummer: PCT/EP2004/000616
(87) Internationale Veröffentlichungsnummer: WO 2004/067157

(56) Entgegenhaltungen:
- EP-A- 0 457 086
- DE-A- 10 008 531
- US-A- 3 500 496

## Beschreibung

Die Erfindung betrifft ein Verfahren zur kontinuierlichen Phasenumwandlung eines Produktes in einem Mischkneter, in welchen das Produkt eingetragen wird, mit Knetelementen an zumindest einer Welle.

### Stand der Technik

In einem kontinuierlichen Mischkneter findet eine Propfenströmung statt, mit einem Konzentrationsprofil über die Länge des Kneters und einem homogenen Phasenzustand für jede axiale Position des Produktes. Am Anfang des Kneters nach dem Eintrag ist bspw. die zu bearbeitende Masse dünnflüssig, da sie viel Flüssigkeit, insbesondere Lösungsmittel enthält. Eine Verdampfung findet nur durch Kontakt mit Wärmeaustauschflächen statt, wobei in der Regel diese Flächen auf die Innenwand des Kneters, die Oberfläche der Welle und möglicherweise noch die Oberfläche von entsprechenden Scheibenelementen beschränkt sind. Beispiele von derartigen Knetern sind in der DE 23 49 106 C, EP 0 517 068 A oder der DE 195 36 944 A beschrieben. Die Aufzählung liesse sich noch beliebig weiter fortsetzen.

In der EP 0 457 086 A2 wird eine Schneckenmaschine mit Einrichtungen zur kombinierten Erfassung des integralen und des lokal in bestimmten Abschnitten des Produktraumes eingetragenen Drehmoments beschrieben. Die Messung des lokalen Moments ermöglicht Aussagen über den lokalen Drehmomenteintrag im Produktraum auf das transportierte Produkt. Dabei wird auch die lokale Viskosität bestimmt, die mittels des berechneten Drehmomentverlaufs und mittels mindestens einer Viskositätsmessung berechnet werden kann. Sie erlaubt eine Aussage über die rehologischen Eigenschaften des Produkts im Prozessraum. Der Verlauf der chemischen Reaktionen im Prozessraum wird mittels der Viskosität beurteilt. Es wird auch vorgeschlagen, dass die Viskosität als Regelgrösse benutzt wird, allerdings geschieht dies dadurch, dass die Viskosität entsprechend den gewünschten Produktqualitäten verändert wird.

Aus der DE 100 08 531 A ist ein Verfahren zum kontinuierlichen Eindampfen bzw. zur thermischen Behandlung von zähviskosen Produkten, insbesondere Elastomeren und Thermoplasten, in einem Mischkneter mit zumindest einer mit Misch- bzw. Knetelementen bestückten Rührwelle bekannt, wobei in ein voreingedampftes, viskoses Produktbett kontinuierlich neue niedrigviskose Produktlösung derart eingemischt wird, dass die Viskosität und Konzentration dieses Produktbettes so eingestellt wird, dass der Energieeintrag, bestehend aus mechanischer Knetenergie und Wärmeübertragung über den Kontakt mit der Kneterwärmeaustauschfläche maximal ist. Dabei ist unter anderem auch vorgesehen, dass das Produkt in dem Mischkneter kontinuierlich rückgemischt wird. In diesem Fall wird der Hauptanteil von Lösungsmittel (Monomer, Flüssigkeit) dank der Knetenergie verdampft.

Der Wärmeübertragungskoeffizient von derartigen Wärmeaustauschflächen ist gering, speziell wenn sich z. B. noch ein Schaum zwischen Masse und Wärmeaustauschfläche bildet, und die spezifische Heizfläche ist ungünstig.

Die Verdampfung beginnt dann effizienter zu werden, wenn die Masse viskoser wird, wenn bspw. der Anteil an Lösungsmittel unter 20% sinkt. In diese pastösere Masse wird es nun leichter, die notwendige Knetenergie einzubringen, die in Wärme umgesetzt wird. Deshalb stellt sich die Frage, wie in einem Mischkneter gearbeitet werden sollte, damit möglichst schnell der Anteil des Lösungsmittels auf einen Bereich abgesenkt wird, bei dem der Eintrag an Knetenergie effizient wird.

### Aufgabe

Der vorliegenden Erfindung liegt die Aufgabe zugrunde, die Arbeitsweise des Mischkneters nochmals wesentlich zu verbessern und effizienter auszugestalten.

### Lösung der Aufgabe

Zur Lösung dieser Aufgabe führt, dass eine Rückmischung des Produkts solange erfolgt, bis über eine Messung des Drehmoments der Welle eine vorbestimmte Viskosität des Produkts, bei der die rückmischenden Knetelemente eine mechanische Energie in eine Kunststoff Lösung (z.B. thermoplastische oder elastomere Lösung) eintragen, um die Phasenumwandlung von zudosierten flüchtigen Komponente(n) von flüssig auf Gas zu realisieren, ermittelt wird, oder eine Rückmischung eines Produktes mit einer bereits erreichten vorbestimmten Viskosität erfolgt, worauf der Mischkneter in einen kontinuierlichen Betrieb umgeschaltet wird, in welchem ggf. noch eine Zugabe von einer weiteren Komponente erfolgt und das Produkt zum Austrag gefördert wird.

D. h., für den Kneter selbst ist nur eine vorgegebene, günstige Viskosität mit einem bestimmten Anteil an Lösungsmittel wichtig, da nur dort die Knetenergie in die Masse eingetragen wird. Als Ergebnis dafür kann die gesamte Verdampfungsanlage wesentlich kompakter gebaut werden.

Die vorliegende Erfindung ist nicht auf ein bestimmtes Gemisch beschränkt. Die Erfindung ist bei allen Gemischen aus Feststoff und Flüssigkeit anwendbar. Damit sie funktioniert, muss lediglich die Viskosität einen Grad erreichen, der hoch genug ist, um genügend Knetenergie einbringen zu können.

Mit der vorliegenden Erfindung ist auch eine Phasenumwandlung von Feststoff auf flüssig möglich. Bspw. ist das erfindungsgemässe Verfahren auch auf die Herstellung von Crumb anwendbar. Bspw. werden Milchpulver, Zucker, Kakao, Öl und Wasser miteinander gemischt und thermisch behandelt. Während der thermischen Behandlung findet eine Reaktion, die Kristallisation von Zucker und die Verdampfung von Wasser statt. Das Verfahren kann ohne weiteres auf einem der o. g. Kneter durchgeführt werden. Die einzige Schwierigkeit ergibt sich bei der Phasenumwandlung des Gemisches von Pulver auf pastöse Masse. Im Pulverzustand ist die Wärmeübertragung durch Kontakt mit der Wand sehr niedrig. Ferner ist es auch unmöglich, eine Knetenergie in die Masse einzubringen, weil die Viskosität des Pulvers äusserst gering ist.

Durch die vorgeschlagene Rückmischung in einem vorgeschalteten ein- oder zweiwelligen Kneter oder in einer ersten Zone eines Kneters ist es jedoch möglich, die zu dosierenden Komponenten direkt in eine pastöse Masse einzubringen. D. h., in dem Kneter wird eine pastöse Masse rückgemischt und der Feststoff in die pastöse Masse eindosiert. Da die Masse nun eine ausreichende Viskosität aufweist, kann durch ein weiteres Kneten auch die entsprechende Knetenergie in die Masse eingebracht werden. Vor allem geschieht dies in Bezug auf die innere Energie, da die Produkterwärmung auch im Inneren der pastösen Masse erfolgt.

Diese pastöse Masse wird dann in einen kontinuierlich arbeitenden Standard-Mischer eingegeben oder wird einfach in eine zweite Zone eines kontinuierlichen Kneters weitergefördert. Dort wird die oben erwähnte Reaktion/Kristallisation/Trocknung ausgeführt.

In einem bevorzugten Ausführungsbeispiel des Verfahrens ist auch daran gedacht, das Verfahren beim Recycling von Stoffen einzusetzen. Nur beispielhaft ist an das Recycling von Polyamidteppichen gedacht. Die Teppichreste werden direkt in eine rückgemischte, pastöse Polyamidmasse eindosiert. Die danach erforderliche innere Energie für die Feststoffaufwärmung bis auf die Schmelzetemperatur (melting point) können dann effizient mit dem Kneten eingebracht werden.

Es gibt auch Fälle, in denen das Drehmoment zu hoch ist. Eine Flash Verdampfung von z. B. Polyolen Lösungen (Zuckerersatz wie Palatinit, Sorbitol) oder die Polymerisationen (z. B. von PMMA) unterhalb des Glaspunkts/Schmelzpunkts können einen kontinuierlichen Kneter mit Propfenströmung blockieren. In diesen Fällen ist die Phasenumwandlung von flüssige auf feste Phase bei Propfenströmung durch zu hohe Viskositäten charakterisiert. Die Schwierigkeit besteht darin, die homogene hochviskose Masse lokal auf der Länge des Apparats zu kneten.

Ein Vorbett/Rührbett/Festbett mit dem fertigen rieselfähigen Produkt kann die zu hohen Viskositäten eliminieren. Ein flüssiges Produkt wird auf dieses rieselfähige granulatartige Vorbett/Rührbett/Festbett zudosiert. Die Rückmischung wirkt dabei so, dass die zähe Phase nur an der Oberfläche der Partikel des fertigen Produktes stattfindet, aber das ganze Rührbett immer rührbar ist. Das Rührorgan "sieht" die hohe Viskosität der zähen Phase nicht mehr. Die Phasenumwandlung zäh/flüssig auf fest passiert an der Oberfläche der Partikeln vom fertigen Produkt dank der Rückmischung. Die Rückmischung wirkt so, dass das Gemisch aus zähem Produkt und festem granulatartigen Produkt eine scheinbar geringe Viskosität hat.

Die kontinuierliche Rückmischung kann mit über die Länge des Kneters verteilten Zugabestellen und mit positiver, fördernder Knetgeometrie bewerkstelligt werden.

Anstatt den auf der Länge verteilten Zugabestellen kann auch nur eine Zugabestelle mit externer Recyclierung von fertigem Produkt die gewünschte Rückmischung realisieren. Die Knetgeometrie ist wie oben mit positiver Förderung zu realisieren.

Die dritte Variante, um eine kontinuierliche Rückmischung in einem Kneter zu kreieren, ist die Kombination einzelner Zugabestelle über die Länge mit einer rückmischenden Knetgeometrie.

Es versteht sich von selbst, dass die entsprechenden Mischkneter für das Rückmischen für eine kontinuierliche Betriebsweise ausgelegt sind. Dabei ist es gleichgültig, ob der Mischkneter einwellig oder zweiwellig ausgestaltet ist. Es bietet sich an, die entsprechenden Knetelemente so auszulegen, dass sie eine Rückmischgeometrie aufweisen.

## Patentansprüche

1. Verfahren zur kontinuierlichen Phasenumwandlung eines Produktes in einem Mischkneter, in welchen das Produkt eingetragen wird, mit Knetelementen an zumindest einer Welle, wobei eine Rückmischung des Produkts solange erfolgt, bis über eine Messung des Drehmoments der Welle eine vorbestimmte Viskosität des Produkts, bei der die rückmischenden Knetelemente eine mechanische Energie in eine Kunststoff-Lösung (z.B. thermoplastische oder elastomere Lösung) eintragen, um die Phasenumwandlung von zudosierten flüchtigen Komponente(n) von flüssig auf Gas und/oder von fest auf flüssig/pastös zu realisieren; ermittelt wird, oder eine Rückmischung eines Produktes mit einer bereits erreichten vorbestimmten Viskosität erfolgt, worauf der Mischkneter in einen kontinuierlichen Betrieb umgeschaltet wird, in welchem ggf. noch eine Zugabe von einer weiteren Komponente erfolgt und das Produkt zum Austrag gefördert wird.

2. Verfahren nach Anspruch 1, **dadurch gekennzeichnet, dass** die rückmischenden Knetelemente mechanische Energie in eine erste Zone des Kneters eintragen und dass positiv fördemde Knetelemente den Transport und ein weiteres Behandeln in einer zweiten Zone des Kneters ermöglichen.

3. Verfahren nach Anspruch 1 oder 2, **dadurch gekennzeichnet, dass** die rückmischenden Knetelemente ein Festbett des Produktes in der ersten Zone des Kneters bilden, worauf eine flüssige Zudosierung einer Komponente mit Phasenumwandlung von flüssig auf fest durchgeführt wird.

4. Verfahren nach einem der Ansprüche 1 bis 3, **dadurch gekennzeichnet, dass** die rückmischenden Knetelemente ein Festbett in der ersten Zone des Kneters bilden, und dass die positiv fördernden Knetelemente den Transport und ein weiteres Behandeln in der zweiten Zone des Kneters ermöglichen.

5. Verfahren nach wenigstens einem der Ansprüche 1 bis 4, **dadurch gekennzeichnet, dass** die rückmischenden Knetelemente eine optimale Produktkonzentration bei einer flüssigen Komponente erzeugen und **dadurch** eine Schaumbildung unterbunden wird.

## Claims

1. Method for continuous phase conversion of a product in a kneader-mixer, into which the product is introduced, with kneading elements on at least one shaft, wherein a back mixing of the product is effected until by way of a measurement of the torque of the shaft a predetermined viscosity of the product is determined, at which the back mixing kneading elements introduce a mechanical energy into a polymer solution (e.g. thermoplastic or elastomer solution) in order to realize the phase conversion of metered volatile component(s) from liquid to gas and/or from solid to liquid/paste-like, or a back mixing of a product having an already reached predetermined viscosity is effected, after which the kneader-mixer is switched over to a continuous mode, in which optionally an addition of a further component is effected and the product is fed to the output.

2. Method according to claim 1, **characterized in that** the back mixing kneading elements introduce mechanical energy into a first zone of the kneader and the positively feeding kneading elements enable the transport and a further treatment in a second zone of the kneader.

3. Method according to claim 1 or 2, **characterized in that** the back mixing kneading elements form a fixed bed of the product in the first zone of the kneader, whereon a liquid metering of a component with phase conversion from liquid to solid is carried out.

4. Method according to one of claims 1 to 3, **characterized in that** the back mixing kneading elements form a fixed bed in the first zone of the kneader, and that the positively feeding kneading elements enable the transport and a further treatment in the second zone of the kneader.

5. Method according to at least one of claims 1 to 4, **characterized in that** the back mixing kneading elements produce an optimum product concentration in the case of a liquid component and foam formation is thereby prevented.

## Revendications

1. Procédé pour convertir en continu les phases d'un produit dans un pétrin mélangeur dans lequel est introduit le produit, avec des éléments malaxeurs sur au moins un arbre, un rétromélange du produit ayant lieu jusqu'à ce que soit déterminée, par une mesure du couple de l'arbre, une viscosité prédéterminée du produit à laquelle les éléments malaxeurs de rétromélange introduisent une énergie mécanique dans une solution de matière plastique (par exemple solution thermoplastique ou élastomère), pour réaliser la conversion de phase d'un ou de composants liquides ajoutés de liquide en gazeuse et/ou de solide en liquide/pâteuse, ou a lieu un rétromélange d'un produit avec une viscosité prédéterminée déjà atteinte, après quoi le pétrin mélangeur est commuté sur un fonctionnement continu dans lequel a éventuellement encore lieu une addition d'un autre composant, et le produit est acheminé vers la sortie.

2. Procédé selon la revendication 1, **caractérisé par le fait que** les éléments malaxeurs de rétromélange introduisent de l'énergie dans une première zone du pétrin et que des éléments malaxeurs à acheminement positif permettent le transport et un autre traitement dans une deuxième zone du pétrin.

3. Procédé selon la revendication 1 ou 2, **caractérisé par le fait que** les éléments malaxeurs de rétromélange forment un lit solide du produit dans la première zone du pétrin, après quoi est réalisée une ajoute liquide d'un composant avec conversion de phase de liquide en solide.

4. Procédé selon l'une des revendications 1 à 3, **caractérisé par le fait que** les éléments malaxeurs de rétromélange forment un lit solide du produit dans la première zone du pétrin, et que les éléments malaxeurs à acheminement positif permettent le transport et un autre traitement dans une deuxième zone du pétrin.

5. Procédé selon l'une des revendications 1 à 4, **caractérisé par le fait que** les éléments malaxeurs de rétromélange génèrent une concentration de produit optimale dans un composant liquide et qu'une formation d'écume est de ce fait évitée.
